# EUROPÄISCHE PATENTSCHRIFT

(11) **EP 0 876 885 B1**
(45) Veröffentlichungstag und Bekanntmachung des Hinweises auf die Patenterteilung: **05.12.2001**
(21) Anmeldenummer: 97810456.0
(22) Anmeldetag: 09.07.1997
(51) Int. Cl.: B25J 15/02

(54) **Greifer**
Gripper
Pince de préhension

(30) Priorität: 07.05.1997 CH 107597
(43) Veröffentlichungstag der Anmeldung: 11.11.1998
(73) Patentinhaber: komax Holding AG, 6036 Dierikon (CH)
(72) Erfinder: Conte, Alois, 6030 Ebikon (CH)
(74) Vertreter: Werffeli, Heinz R., Dipl.-Ing.ETH.

(56) Entgegenhaltungen:
- DE-U- 29 701 719
- FR-A- 1 397 958
- GB-A- 908 864
- US-A- 4 728 137

## Beschreibung

Die Erfindung betrifft einen Greifer, insbesondere Kabelgreifer, nach dem oberbegriff des Patentanspruchs 1.

Es sind bereits Greifer der eingangs genannten Art bekannt (siehe zum Beispiel GB-A-908864), die jedoch den Nachteil aufweisen, dass zur Erzielung eines grösseren Öffnungswinkels der Greiferhebel oder -arme von beispielsweise 150° und mehr eine relativ grosse Bauhöhe des Greifers erforderlich ist, was wiederum in einer relativ grossen Masse des Letzteren resultiert. Soll der Greifer z.B. in der Robotertechnik auf einem Schwenkarm angeordnet werden, dann ist zur Erzielung eines möglichst geringen Leistungsbedarfes für den Antrieb des Schwenkarmes zur Ausführung einer präzisen, möglichst schnellen Schwenkbewegung des Letzteren ein möglichst kompakter Greifer erwünscht.

Aufgabe der vorliegenden Erfindung ist die Schaffung eines Greifers der eingangs genannten Art, welcher die vorangehend angeführten Nachteile der bisher bekannten Greifer nicht aufweist, d.h. welcher trotz grossem Öffnungswinkel der Greiferhebel oder -arme extrem kompakt und leicht ist.

Diese Aufgabe wird gemäss Anspruch 1 gelöst.

Vorteilhafte Weiterausgestaltungen des erfindungsgemässen Greifers sind Gegenstand der Ansprüche 2 bis 9.

Nachstehend wird die Erfindung anhand der Zeichnung beispielsweise erläutert. Es zeigen:
Fig. 1 in vergrössertem Massstab eine perspektivische Ansicht einer beispielsweisen Ausführungsform eines Greifers, teilweise im Schnitt;
Fig. 2 eine perspektivische Ansicht ähnlich Figur 1, jedoch aus einer anderen Betrachtungsrichtung und zur Erzielung einer besseren Übersicht ohne die an den Hebelarmen befestigten Klemmbacken;
Fig. 3 eine perspektivische Ansicht der Kolbenstange mit in Führungsnut derselben seitlich verschiebbaren Nutensteinen;
Fig. 4 einen Schnitt längs der Linie IV-IV in Figur 2 zur Veranschaulichung der Kinematik des Hebelgetriebes des Greifers gemäss den Figuren 1 und 2:
Figur 5 rein schematisch die Kinematik des Hebelgetriebes gemäss Figur 4;
Fig. 6 bis 11 in perspektivischer Ansicht verschiedene Details des Greifers gemäss den Figuren 1 und 2;
Fig. 12 und 14 in perspektivischer Ansicht, teilweise im Schnitt, ein Teil des Greifers gemäss den Figuren 1 bis 11 in drei verschiedenen Positionen der Kolbenstange bzw. der durch Letztere bewegten Hebelarme;
Fig. 15 bis 17 perspektiv verschiedene Ansichten des Greiferbasiskörpers;
Fig. 18 eine Seitenansicht des einen Hebelarmes ohne die daran zu befestigende Greiferbacke;
Fig. 19 eine perspektivische Ansicht des in Fig. 18 dargestellten Hebelarmes; und
Fig. 20 analog zu Figur 19 eine perspektivische Ansicht des zweiten Hebelarmes ohne die daran zu befestigende Greiferbacke.

Nachstehend wird die Erfindung anhand einer beispielsweisen Ausführungsform eines pneumatisch betätigten Kabelgreifers zum Einsatz in einem Kabelverarbeitungsautomaten zum zentrierenden klemmen eines zu verarbeitenden Kabels zwischen zwei auf bekannte Weise ausgebildeten Greiferbacken näher erläutert.

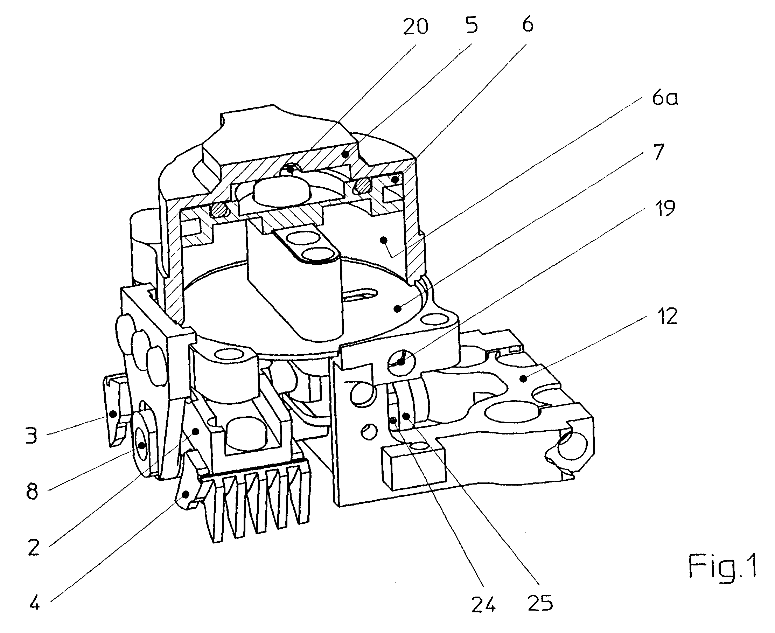

Zur besseren Übersichtlichkeit der verschiedenen Figuren sind ausser in Figur 1 die an den zwei Hebeln bzw. Hebelarmen 1 und 2 zu befestigenden, auf bekannte Weise als Zentrier- und Klemmbacken 3 und 4 ausgebildeten Greiferbacken nicht eingezeichnet.

Selbstverständlich könnten die Greiferbacken 3 und 4 auch direkt an den zugeordneten Hebelarmen 1 und 2 angeformt und auf jede andere in der Robotertechnik erforderliche Weise ausgebildet sein.

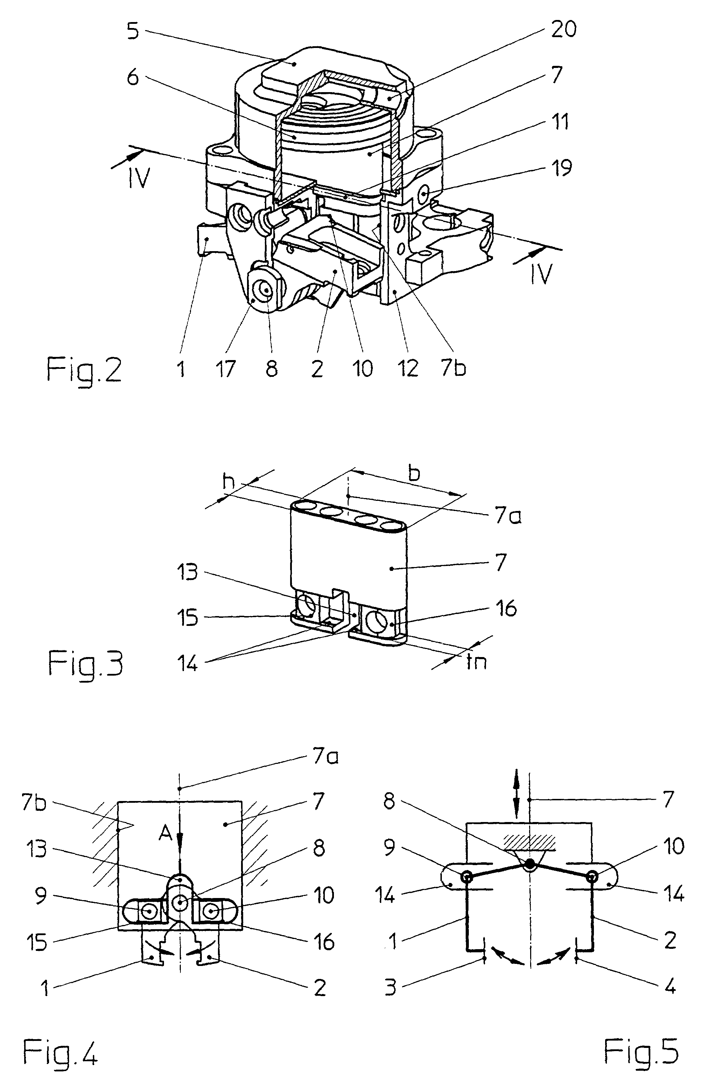

Zum pneumatischen Antrieb der beiden Hebelarme 1 und 2 dient ein in einem Zylindergehäuse 5 abdichtend geführter, in seiner Längsachse verschiebbarer Kolben 6, welcher über eine starr mit ihm verbundene Kolbenstange 7 (siehe z.B. die Figuren 4 und 5) gelenkig mit je einem zwischen der Greiferbacke 3 bzw. 4 und dem gemeinsamen Drehpunkt 8 eines jeden der beiden einarmigen Hebelarmen 1 bzw. 2 sich befindenden, zapfenförmig ausgebildeten Anlenkpunkt 9 bzw. 10 verbunden ist.

Die Kolbenstange 7 ist dabei in ihrer Längsrichtung mittels einer ringförmigen Abdichtung 11 abgedichtet verschiebbar in einer entsprechenden Ausnehmung 7b im Greiferbasiskörper 12 seitlich spielfrei geführt. Auf diese Weise wird der Kolben 6 über die starr mit ihm verbundene Kolbenstange 7 über seinen gesamten Hubbereich zentrisch gegenüber der Zylinderlaufbahn 6a geführt.

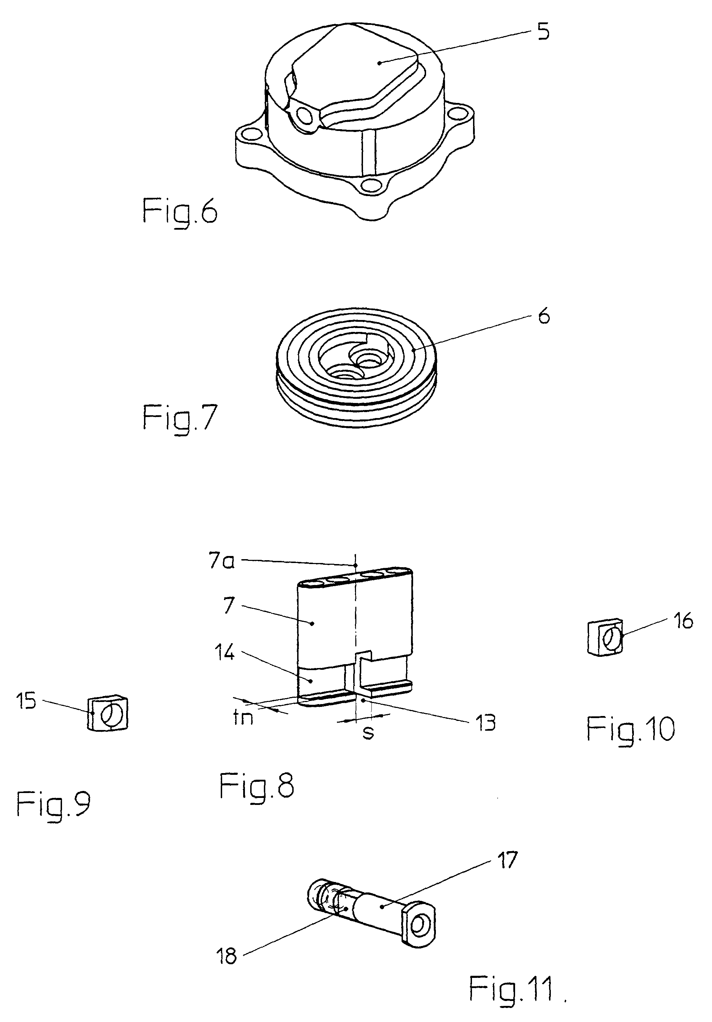

Die Kolbenstange 7 ist, wie z.B. aus den Figuren 3 und 7 ersichtlich, an ihrem vom Kolben 6 abgewandten Endbereich mit einer senkrecht zu ihrer Längsachse 7a sich erstreckenden, durch eine Ausnehmung 13 unterbrochenen Führungsnut 14 zur spielfrei verschiebbar geführten Aufnahme von den mit Nutensteinen 15 bzw. 16 bestückten Anlenkzapfen 9 bzw. 10 versehen. Dabei weist die Kolbenstange 7 zur Vermeidung einer Drehung um ihre Längsachse 7a in Längsrichtung der Letzteren betrachtet einen länglichen Querschnitt auf, welcher eine der erforderlichen Länge der Führungsnut entsprechende Breite b und aus Festigkeitsgründen eine etwa 170% der Führungsnuttiefe tn entsprechende Höhe h aufweist.

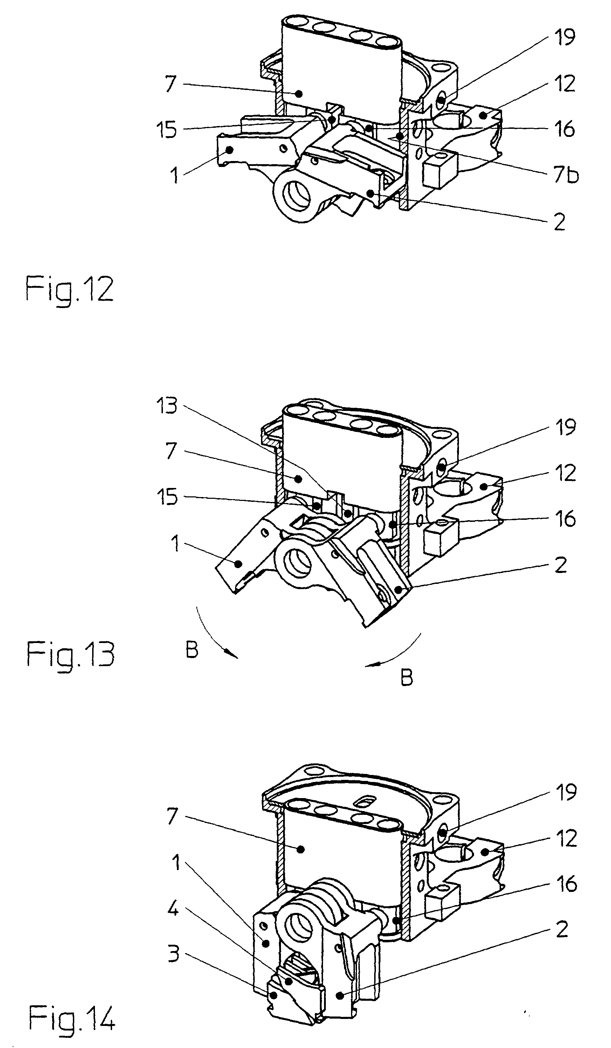

Die Ausnehmung 13 in der Kolbenstange 7 ermöglicht, wie z.B. aus der Fig. 4 ersichtlich, eine Verschiebung der Führungsnut 14 in Richtung des Pfeils A bis über den Drehpunkt 8 hinaus. Der Drehpunkt 8 wird dabei durch die insbesondere aus Figur 11 ersichtliche Achse 17 gebildet, welche in ihrem Bereich 18 seitlich auf eine geringere Breite als die Breite s (siehe Fig. 8) der Ausnehmung 13 abgeflacht ist, um eine ungehinderte Verschiebung der Kolbenstange 7 über diese Achse 17 hinaus zu erlauben.

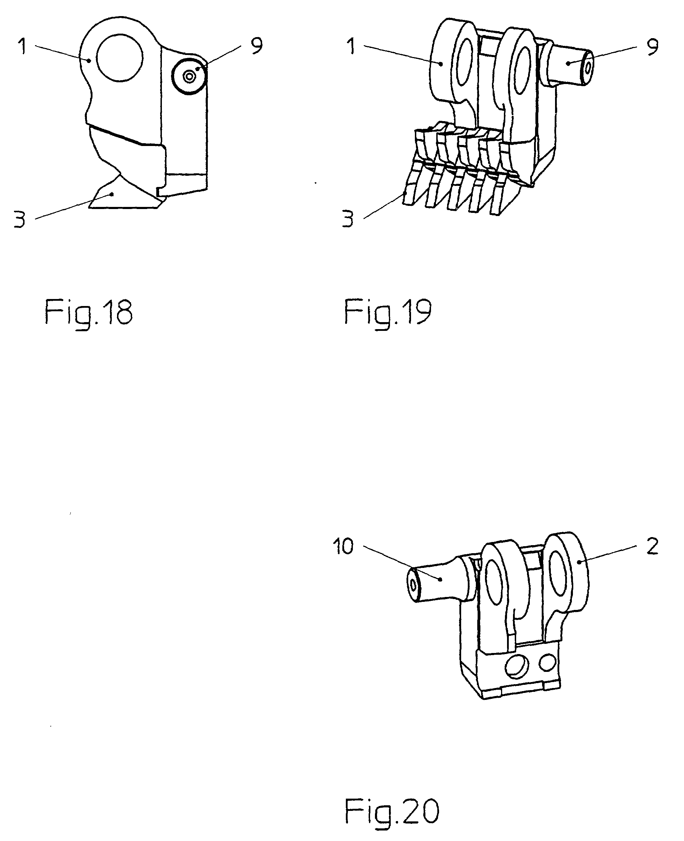

Um die beiden Kabelzentrier- und -klemmbacken 3 und 4 auf bekannte Weise miteinander in Eingriff zu bringen, sind die beiden einarmigen Hebel 1 und 2, wie insbesondere aus den Figuren 12 bis 14 und 18 bis 20 ersichtlich, in Ergreifungsrichtung B im Bereich des Anlenkpunktes 9 bzw. 10 gegeneinander zu abgekröpft.

Zur Erzielung einer möglichst kompakten Bauweise des Kabelgreifers sind ferner die beiden einarmigen Hebelarme 1 und 2 wie insbesondere aus den Figuren 1,2 und 12 bis 14 in Richtung A der Längsachse 7a der Kolbenstange 7 gesehen seitlich versetzt zueinander seitlich neben der Kolbenstange 7 auf der Drehachse 17 schwenkbar angeordnet. Dabei ist der Anlenkzapfen 10 des weiter weg von der Kolbenstange 7 seitlich versetzt angeordneten Hebelarmes 2 um die seitliche Versetzung länger als der Anlenkzapfen 9 des näher zur Kolbenstange 7 schwenkbar gelagerten Hebelarmes 1, so dass beide Anlenkzapfen 9 und 10 gleich weit mit Gleitsitz in die zugeordneten Nutsteine 15 bzw. 16 eingreifen.

Aus den Figuren 12 bis 14 sind die verschiedenen Phasen der Greiferkinematik beim Schliessen der Greifer ersichtlich.

Zur pneumatischen Betätigung des Kolbens 6 wird die Druckluft je nach der zu erzielenden Bewegungsrichtung des Kolbens 6 über die bezüglich dem Letzteren wechselseitig mit dem Innern des Zylindergehäuses 5 in Verbindung stehenden Anschlussstellen 19 bzw. 20 zugeführt.

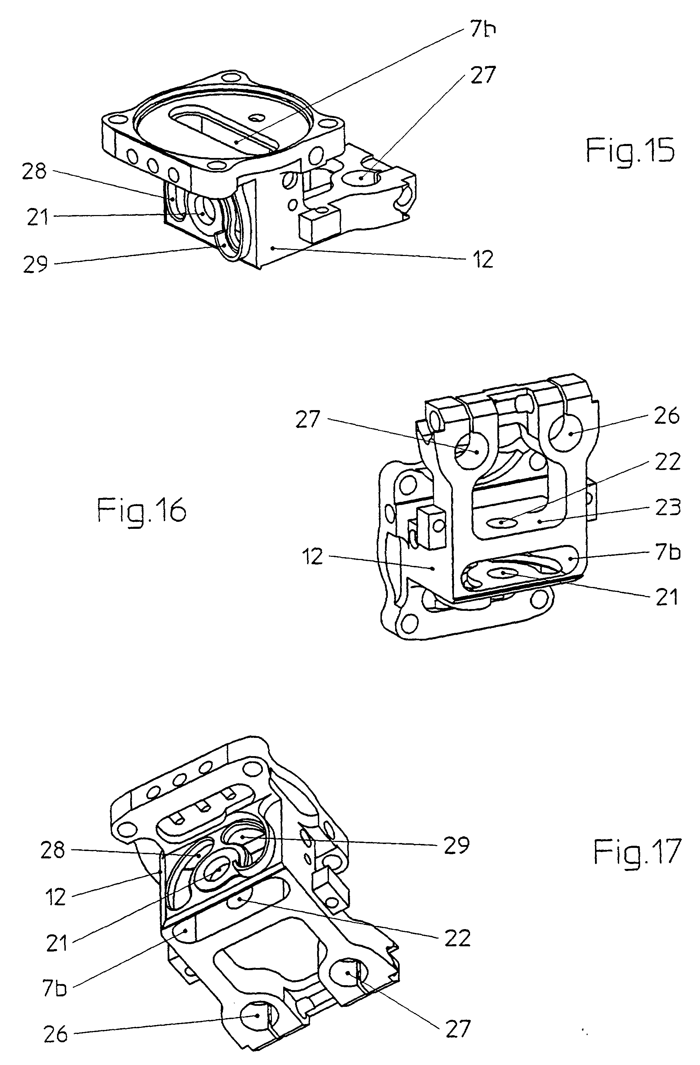

Die Achse 17 zur schwenkbaren Lagerung der beiden Hebelarme 1 und 2 erstreckt sich zu ihrer Befestigung im Greiferbasiskörper 12 mit Schiebesitz durch die beiden aus den Figuren 15 bis 17 ersichtlichen Bohrungen 21 und 22 und wird auf der von der Kolbenstange 7 abgewandten Aussenseite 23 der Bohrung 22 mittels zweier Kontermuttern 24 und 25 in ihrer Lage fixiert.

Die beiden Bohrungen 26 und 27 im Greiferbasiskörper 12 dienen z.B. zur Befestigung des Greifers an einem nicht dargestellten Roboterarm. Die beiden Anlenkzapfen 9 und 10 der beiden Hebelarme 1 und 2 greifen durch kreisbogenförmig ausgebildete, im Greiferbasiskörper 12 vorgesehene Durchtrittsöffnungen 28 und 29 (siehe Figur 17) hindurch in die in der Kolbenstange 7 seitlich verschiebbar geführten Nutsteine 15 und 16 ein. Die beiden Durchtrittsöffnungen 28 und 29 sind dabei derart bemessen, dass die Schwenkbewegung der beiden Anlenkzapfen 9 und 10 über den gesamten Hub der Kolbenstange 7 nicht durch Teile des Greiferbasiskörpers 12 behindert wird.

Bei einem Greifer der dargestellten Ausführungsform ist ohne weiteres ein Öffnungswinkel von 150° und mehr zwischen den beiden Hebelarmen 1 und 2 gemessen realisierbar.

## Patentansprüche

1. Greifer mit zwei pneumatisch oder hydraulisch über einen in einem Zylinder (5) abdichtend geführten Kolben (6) betätigbaren Greiferbacken (3,4), wobei der Kolben (6) zum Antrieb der letzteren über ein Hebelgetriebe gelenkig mit denselben verbunden ist, wobei die Greiferbacken (3,4) an den Enden je eines einarmigen Hebels (1,2) vorgesehen sind, und der Kolben (6) über eine Kolbenstange (7) gelenkig mit je einem zwischen der Greiferbacke und dem Drehpunkt (8) eines jeden einarmigen Hebels (1,2) sich befindenden Anlenkpunkt (9,10) verbunden ist, **dadurch gekennzeichnet, dass** die Kolbenstange (7) an ihrem vom Kolben (6) abgewandten Endbereich mit einer senkrecht zu ihrer Längsachse (7a) sich erstreckenden Führungsnut (14) zur verschiebbar geführten Aufnahme von den Anlenkpunkt bildenden Anlenkzapfen (9,10) der beiden einarmigen Hebel (1,2) versehen ist, und dass die beiden einarmigen Hebel (1,2) in Richtung der Längsachse (7a) der Kolbenstange (7) gesehen seitlich versetzt neben der letzteren schwenkbar angeordnet sind.

2. Greifer nach Anspruch 1, **dadurch gekennzeichnet, dass** die durch die Drehpunkte (8) der beiden einarmigen Hebel (1,2) verlaufenden Drehachsen zusammenfallen.

3. Greifer nach Anspruch 1 oder 2, **dadurch gekennzeichnet, dass** die Kolbenstange (7) an ihrer einen Stirnseite starr mit dem Kolben (6) verbunden und in ihrer Längsrichtung abgedichtet (11) verschiebbar und seitlich spielfrei geführt ist.

4. Greifer nach einem der Ansprüche 1 bis 3, **dadurch gekennzeichnet, dass** die Anlenkzapfen (9,10) mit nutsteinen (15,16) Bestücht sind, die in Den Führungsnut (15) den Kolbenstange (7) verschiebbar geführt sind.

5. Greifer nach Anspruch 4, **dadurch gekennzeichnet, dass** die Kolbenstange (7) in Richtung ihrer Längsachse (7b) betrachtet einen länglichen Querschnitt aufweist, welcher mindestens im Bereich der Führungsnut (14) eine mindestens der Länge der Führungsnut (14) entsprechende Breite (b) und eine mindestens 130% der Führungsnuttiefe (tn) entsprechende Höhe (h) aufweist.

6. Greifer nach einem der Ansprüche 1 bis 5, **dadurch gekennzeichnet, dass** die Kolbenstange (7) auf ihrer vom Kolben (6) abgewandten Seite mit einer senkrecht zur Führungsnut (14) verlaufenden, mittig angeordneten, in Längsrichtung der Kolbenstange (7) von der vom Kolben (6) abgewandten Stirnseite der Kolbenstange (7) her in Richtung zum Kolben (6) hin sich erstreckenden Ausnehmung (13) zum ungehinderten freien Durchtritt mindestens einer zur schwenkbaren Lagerung der beiden einarmigen Hebel (1,2) dienenden Schwenkachse (17), versehen ist.

7. Greifer nach einem der Ansprüche 1 bis 6, **dadurch gekennzeichnet, dass** die beiden einarmigen Hebel (1,2) in Ergreifungsrichtung (B) gegeneinander zu abgekröpft sind.

8. Greifer nach einem der Ansprüche 1 bis 7, **dadurch gekennzeichnet, dass** der Hub des Kolbens (6) derart bemessen ist, dass der Schwenkbereich der einzelnen Hebelarme (1,2) mindestens 75° beträgt.

9. Greifer nach einem der Ansprüche 1 bis 8, **dadurch gekennzeichnet, dass** die Greiferbacken als Kabelgreiferelemente (3,4) ausgebildet sind.

## Claims

1. Gripper having two gripper jaws (3,4) able to be actuated pneumatically or hydraulically via a piston (6) which is guided with a seal in a cylinder (5), the piston (6) being hinged to the jaws via a lever linkage to allow them to be operated, the gripper jaws (3,4) each being provided at the end of a single-ended lever (1,2) and the piston (6) being hinged via a piston rod (7) to linking points (9,10) each situated between the gripper jaw and the pivot point (8) of one of the single-ended lever arms (1,2), **characterised in that** the piston rod (7) is provided, in its end region remote from the piston (6), with a guide groove (14) which extends perpendicularly to the longitudinal axis (7a) of the piston rod, and which is intended to take linking spigots (9,10), in such a way that they are displaceably guided, for the two single-ended levers (1,2), which spigots form the linking points, and **in that** the two single-ended levers (1,2) are, looking in the direction of the longitudinal axis (7a) of the piston rod (7), arranged to be pivotable and offset laterally next to the latter.

2. Gripper according to claim 1, **characterised in that** the axes of pivot extending through the pivot points (8) of the two single-ended levers (1,2) coincide.

3. Gripper according to claim 1 or 2, **characterised in that** the piston rod (7) is rigidly connected to the piston (6) at one end face and is displaceable with a seal (11) in its longitudinal direction and is guided to be free of play laterally.

4. Gripper according to any of claims 1 to 3,
**characterised in that** the linking spigots (9,10) are fitted with slide blocks (15,16) which are displaceably guided in the guide groove (14) in the piston rod (7).

5. Gripper according to claim 4, **characterised in that** the cross-section of the piston rod (7) is elongated looking in the direction of its longitudinal axis (7b) and at least in the region of the guide groove (14) is of a width (b) at least equal to the length of the guide groove and a height (h) equal to at least 130% of the depth (tn) of the guide groove.

6. Gripper according to any of claims 1 to 5,
**characterised in that** at its end remote from the piston (6) the piston rod (7) is provided with a centrally arranged recess (13) to allow free and unobstructed passage to at least one pivot shaft (17) used for the two single-ended levers (1,2) to be mounted to pivot on, which recess extends perpendicularly to the guide groove (14) and, in the longitudinal direction of the piston rod, from the end face of the piston rod (7) remote from the piston (6) towards the piston (6) .

7. Gripper according to any of claims 1 to 6,
**characterised in that** the two single-ended levers (1,2) are angled towards one another in the gripping direction (B).

8. Gripper according to any of claims 1 to 7, **characterised in that** the travel of the piston (6) is so sized that the range of pivot of the individual lever arms (1,2) is at least 75°.

9. Gripper according to any of claims 1 to 8,
**characterised in that** the gripper jaws are in the form of cable gripping members (3,4).

## Revendications

1. Griffe comprenant deux mâchoires de griffe (3, 4) qui peuvent être actionnées par voie pneumatique ou par voie hydraulique via un piston (6) guidé de manière étanche dans un cylindre (5), dans laquelle le piston (6), pour actionner les mâchoires, est monté en articulation avec ces dernières via une transmission à levier, les mâchoires de griffe (3, 4) étant prévues aux extrémités d'un levier à bras unique respectif (1, 2) et le piston (6) étant relié via une tige de piston (7) en articulation avec respectivement un point d'articulation (9, 10) se trouvant entre la mâchoire de griffe et le point d'appui (8) d'un levier à bras unique respectif (1, 2), **caractérisé en ce que** la tige de piston (7) est munie, dans sa zone terminale se détournant du piston (6), d'une rainure de guidage (14) s'étendant perpendiculairement à son axe longitudinal (7a) pour la réception guidée en coulissement des tourillons articulés (9, 10) des deux leviers à bras unique (1, 2) formant le point d'articulation, et **en ce que** les deux leviers à bras unique (1, 2) sont disposés en. pivotement à côté de la tige de piston en étant décalés en direction latérale, vu dans le sens de l'axe longitudinal (7a) de la dernière citée.

2. Griffe selon la revendication 1, **caractérisée en ce que** les axes de rotation s'étendant à travers les points d'appui (8) des deux leviers à bras uniques (1, 2) coïncident.

3. Griffe selon la revendication 1 ou 2, **caractérisée en ce que** la tige de piston (7) est reliée, à son premier côté frontal, à demeure avec le piston (6) et est guidée dans sa direction longitudinale en coulissement étanche (11) et en l'absence de jeu latéral.

4. Griffe selon l'une quelconque des revendications 1 à 3, **caractérisée en ce que** les tourillons d'articulation (9, 10) sont équipés de coulisseaux à rainures (15, 16) qui sont guidés en coulissement dans la rainure de guidage (14) de la tige de piston (7).

5. Griffe selon la revendication 4, **caractérisée en ce que** la tige de piston (7) présente, lorsqu'on regarde dans la direction de son axe longitudinal (7b), une section transversale oblongue qui présente, au moins dans la zone de la rainure de guidage (14), une largeur (b) correspondant au moins à la longueur de la rainure de guidage (14) et une hauteur (h) correspondant au moins à 130 % de la profondeur de la réunion de guidage (14).

6. Griffe selon l'une quelconque des revendications 1 à 5, **caractérisée en ce que** la tige de piston (7), sur son côté se détournant du piston (6), est munie d'un évidement (13) s'étendant perpendiculairement à la rainure de guidage (14), disposée en position centrale et orientée en direction longitudinale de la tige de piston depuis le côté frontal de la tige de piston (7) se détournant du piston (6) en direction du piston (6), pour la pénétration libre sans entrave d'au moins un axe de pivotement (17) qui fait office de palier pivotant pour les deux leviers à bras unique (1, 2).

7. Griffe selon l'une quelconque des revendications 1 à 6, **caractérisée en ce que** les deux leviers à bras unique (1, 2) forment un angle droit l'un par rapport à l'autre dans la direction de préhension (B).

8. Griffe selon l'une quelconque des revendications 1 à 7, **caractérisée en ce que** la course du piston (6) est mesurée de telle sorte que la zone de pivotement des bras de leviers individuels (1, 2) s'élève à au moins 75°.

9. Griffe selon l'une quelconque des revendications 1 à 8, **caractérisée en ce que** les mâchoires de la griffe sont réalisées sous la forme d'éléments de saisie de câbles (3, 4).
